Europäisches Patentamt

European Patent Office

Office européen des brevets

(11) Veröffentlichungsnummer: **0 444 449 A1**

## (12) EUROPÄISCHE PATENTANMELDUNG

(21) Anmeldenummer: 91101652.5

(22) Anmeldetag: 07.02.91

(51) Int. Cl.5: **G01P 15/135**

(30) Priorität: 28.02.90 DE 4006237

(43) Veröffentlichungstag der Anmeldung:
**04.09.91 Patentblatt 91/36**

(84) Benannte Vertragsstaaten:
**AT BE CH DK ES FR GB GR IT LI LU NL SE**

(71) Anmelder: **ERNO Raumfahrttechnik**
**Gesellschaft mit beschränkter Haftung**
**Hünefeldstrasse 1-5**
**W-2800 Bremen 1(DE)**

(72) Erfinder: **Groth, Volker**
**Luisental 21E**
**W-2800 Bremen(DE)**
Erfinder: **Kraft, Gerd, Dr.**
**Fleestrade 11**
**W-2800 Bremen 1(DE)**
Erfinder: **Weber, Karl-Heinz, Dr.**
**Heinrich-Böll-Str. 22**
**W-2800 Bremen 1(DE)**
Erfinder: **Zier, Manfred, Dr.**
**Neustadtsweg 8**
**W-2863 Ritterhude(DE)**

(74) Vertreter: **Schramm, Ewald Werner Josef**
**c/o Deutsche Airbus GmbH, Patentabteilung**
**GZ13BRE, Postfach 10 78 45**
**W-2800 Bremen 1(DE)**

(54) **Vorrichtung zur Beschleunigungsmessung.**

(57) Eine Vorrichtung zur Beschleunigungsmessung, die insbesondere dem Erkennen des Vorliegens von Beschleunigungen größer/gleich 1 g einerseits und von Mikrogravitation bzw. Schwerelosigkeit andererseits dient und die als passives elektrisches Bauelement ausgebildet ist, besteht aus einem im Inneren eines Gehäuses frei beweglich angeordneten Körper sowie aus einer Anzahl von durch diesen Körper zu betätigenden elektrischen Schaltern. Die Betätigungsstifte der Schalter ragen in das Innere des Gehäuses und sind auf den Körper gerichtet, dessen Masse so auf die Betätigungskraft der Schalter abgestimmt ist, daß eine Betätigung durch den Körper erst oberhalb einer vorgebbaren, auf den Körper wirkenden Mindestbeschleunigung erfolgt.

FIG. 1

Die Erfindung betrifft eine Vorrichtung zur Beschleunigungsmessung, insbesondere zum Erkennen von Beschleunigungen größer/gleich 1 g einerseits und solchen im Bereich der Mikrogravitation andererseits, mit einem Beschleunigungssensor sowie einer diesem zugeordneten elektrischen Auswerteschaltung.

Das Erkennen des Vorliegens von Bedingungen der Mikrogravitation bzw. der Schwerelosigkeit ist in allen Raumfahrtgeräten von Bedeutung, bei denen sich der Funktionszustand mit dem Eintreten und/oder dem Ende der Schwerelosigkeit bzw. der Mikrogravitation ändern soll. Dies gilt insbesondere für autonome Geräte, die ohne Einwirkung von außen, wie Steuerkommandos vom Trägerfahrzeug, selbsttätig operieren sollen.

Für derartige Geräte sind im wesentlichen zwei Maßnahmen bekannt, um den Eintritt des gewünschten Fun ktionszustandes festzulegen. Dies geschieht entweder über eine vor Beginn der Mission eingestellte Zeit-Programmierung, die die Funktionsänderung auslöst, oder aber durch die ständige Abfrage von speziellen g bzw. m-g Sensoren, durch die Beginn und Dauer des Zustandes der Schwerelosigkeit bzw. der Mikrogravitation ermittelt werden.

Im ersten Fall, bei einer Zeitprogrammierung, ist dabei stets das Risiko von Zeitverschiebungen, beispielsweise durch einen vorzeitigen oder verzögerten Start des Trägerfahrzeuges gegeben, so daß häufig durch Sicherheitszuschläge zu den programmierten Zeiten eine Verringerung der Experimentierdauer unter Mikrogravitationsbedingungen hingenommen wird.

Im zweiten Fall, bei Verwendung von Beschleunigungssensoren, müssen aktive elektrische Schaltungen für diese Sensoren vorgesehen werden, die überdies zumindesten dreifach vorhanden sein müssen, um alle Raumrichtungen für die Lage des Beschleunigungsvektors zu erfassen.

Aufgabe der Erfindung ist es, eine Vorrichtung der eingangs genannten Art so auszubilden, daß dadurch ein einfaches passives Bauelement zum Erkennen des Vorliegens von Bedingungen der Mikrogravitation geschaffen wird.

Die Erfindung löst diese Aufgabe durch eine Vorrichtung mit den kennzeichnenden Merkmalen des Patentanspruches 1. Vorteilhafte Weiterbildungen der erfindungsgemäßen Vorrichtung, die insbesondere einer Optimierung im Hinblick auf einen möglichst einfachen, platz- und

gewichtsparenden Aufbau dieser Vorrichtung dienen, sind in den weiteren Ansprüchen angegeben.

Im folgenden soll die Erfindung anhand eines in der Zeichnung dargestellten Ausführungsbeispiels näher erläutert werden. Es zeigen:

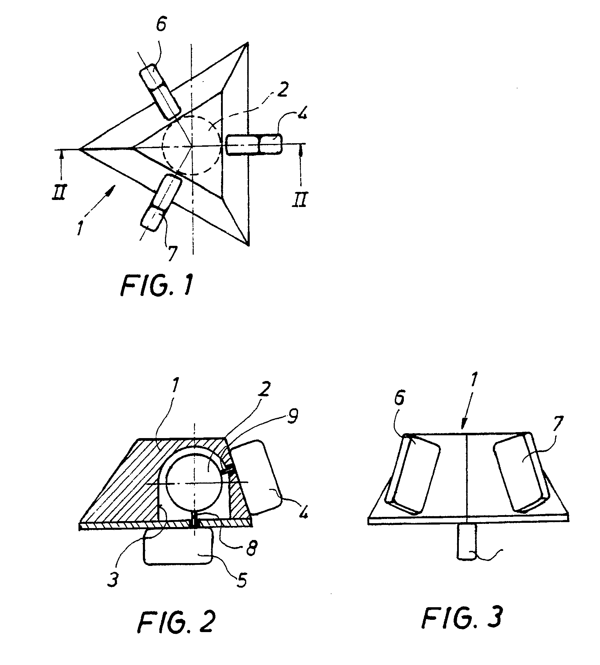

Fig. 1    eine Draufsicht auf eine Vorrichtung zur Beschleunigungsmessung,

Fig. 2    einen Schnitt gemäß II-II durch die in Fig. 1 dargestellte Anordnung und

Fig. 3    eine seitliche Ansicht der Anordnung gemäß Fig. 1.

In den Figuren sind gleiche Bauteile mit den gleichen Bezugszeichen versehen.

Im Inneren eines als abgeplattetes Tetraeder ausgebildeten Gehäuses 1 ist ein Prüfkörper in Form einer massiven Kugel 2 angeordnet. Die Kugel 2 ist frei beweglich in einer Ausnehmung 3 des Gehäuses 1 positioniert, ihr Abstand zu den Mitten der das Gehäuse 1 begrenzenden Tetraederflächen ist so gewählt, daß er in etwa dem Schaltweg von elektrischen Schaltern 4 bis 7 entspricht, die auf den Außenseiten der Tetraederflächen angeordnet sind. Die Betätigungsstifte 8,9 der Schalter 4 bis 7 ragen durch mittig in die Tetraederflächen eingebrachte Bohrungen in das Innere des Hohlraumes 3 und sind in etwa auf das Zentrum der Kugel 2 gerichtet.

Die Masse der Kugel 2 ist so auf die erforderlichen Betätigungskräfte der Schalter 4 bis 7 abgestimmt, daß bei einer beliebig gerichteten Beschleunigung von wenigstens 1 g in jedem Fall einer der vier Schalter 4 bis 7 betätigt wird, während unter den Bedingungen der Mikrogravitation, beispielsweise bei Beschleunigungen unter 0,1 g, die von der Kugelmasse ausgeübte Kraft nicht ausreicht, um die Rückstellkräfte der Schalter 4 bis 7 zu überwinden.

Bei der im hier beschriebenen Ausführungsbeispiel gewählten tetraedrischen Anordnung wird bei jeder beliebigen Orientierung des Beschleunigungsvektors in bezug auf das Gehäuse 1 stets wenigstens einer der Schalter 4 bis 7 mit mehr als 85 % der resultierenden Massenkraft der Kugel beaufschlagt. Werden nun die Schalter so ausgelegt, daß sie im unbetätigten Zustand geschlossen sind, und sind sie in Reihe elektrisch leitend miteinander verbunden, so ergibt sich insgesamt die nachfolgende Zuordnung:

- bei Beschleunigungen ≦ 0,1 g bzw. Schwerelosigkeit sind alle Schalter geschlossen, die Leitung hat Durchgang,

- bei Beschleunigungen ≧ 1 g ist mindestens ein Schalter offen, die Leitung ist unterbrochen.

Um die mechanischen Beanspruchungen, die auf die vorstehend beschriebene Anordnung beispielsweise infolge von Vibrationen beim Start auftreten, auf ein Minimum zu reduzieren, ist es zweckmäßig, die Bewegungsmöglichkeiten der Kugel 2 durch die Wahl eines möglichst eng dimensionierten Hohlraums 3 auf das für die Betätigung der Schalter 4 bis 7 erforderliche Maß zu beschränken. Zugleich ist es zur weiteren Erhöhung der Vibrationsbeständigkeit der Anordnung vorteilhaft, wenn die Kugel 2 und/oder das Gehäuse 1 mit einer entsprechenden Schutzschicht überzogen ist.

Werden die Schalter 4 bis 7 so ausgewählt, daß sie im unbetätigten Zustand offen sind und werden sie überdies elektrisch parallel geschaltet, so ergibt sich im Gegensatz zum vorstehend beschriebenen Fall bei Vorliegen von 1 g eine durchgehende, bei weniger als 0,1 g eine unterbrochene Leitung.

## Patentansprüche

1. Vorrichtung zur Beschleunigungsmessung, insbesondere zum Erkennen von Beschleunigungen größer/gleich 1 g einerseits und solchen im Bereich der Mikrogravitation andererseits, mit einem Beschleunigungssensor sowie einer diesem zugeordneten elektrischen Auswerteschaltung, dadurch gekennzeichnet, daß der Sensor aus einem in einem Gehäuse (1) frei beweglich angeordneten starren Körper (2) besteht, daß in dem Gehäuse (1) Betätigungsstifte (8,9) von elektrischen Schaltern (4-7) angeordnet sind, die in etwa auf den Mittelpunkt des Gehäuses (1) ausgerichtet sind und daß die Masse des Körpers (2) so auf die Betätigungskraft der Schalter (4-7) abgestimmt ist, daß eine Betätigung durch den Körper (2) erst oberhalb einer vorgebbaren auf den Körper wirkenden Mindestbeschleunigung erfolgt.

2. Vorrichtung nach Anspruch 1, dadurch gekennzeichnet, daß der Körper (2) als Kugel ausgebildet ist.

3. Vorrichtung nach Anspruch 1 oder 2, dadurch gekennzeichnet, daß dem Gehäuse (1) wenigstens vier Schalter (4-7) angeordnet sind.

4. Vorrichtung nach Anspruch 3, dadurch gekennzeichnet, daß das Gehäuse (1) angenähert tetraederförmig ausgebildet ist und daß die Betätigungsstifte (8,9) durch in den Tetraederflächen angeordnete Bohrungen senkrecht zur jeweiligen Fläche in das Innere des Gehäuses (1) ragen.

5. Vorrichtung nach einem der Ansprüche 1 bis 4, dadurch gekennzeichnet, daß die Schalter (4-7) das Gehäuse (1) bilden.

6. Vorrichtung nach einem der Ansprüche 1 bis 5, dadurch gekennzeichnet, daß die Schalter (4-7) bei Vorliegen von Mikrogravitation sämtlich geschlossen sind und daß sie elektrisch in Reihe geschaltet sind.

7. Vorrichtung nach einem der Ansprüche 1 bis 5, dadurch gekennzeichnet, daß die Schalter (4-7) bei Vorliegen von Mikrogravitation sämtlich offen sind und daß sie elektrisch parallel geschaltet sind.

FIG. 1

FIG. 2

FIG. 3

**Europäisches Patentamt**

# EUROPÄISCHER RECHERCHENBERICHT

Nummer der Anmeldung

## EP 91 10 1652

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 312 227 (OZOLS) <br> * Spalte 1, Zeilen 10 - 29 * * Spalte 8, Zeile 62 - Spalte 9, Zeile 34; Figur 11 * <br> — — — | 1-5,7 | G 01 P 15/135 |
| Y | US-A-3 312 188 (LODE & WERNER) <br> * Spalte 5, Zeilen 9 - 26; Figur 4 * <br> — — — | 1,2,4 | |
| Y | PATENT ABSTRACTS OF JAPAN vol. 6, no. 100 (P-121)(978) 09 Juni 1982, <br> & JP-A-57 34461 (TOYOTA JIDOUSHIYA HANBAI K.K.) 24 Februar 1982, <br> * das ganze Dokument * <br> — — — — — | 1-3,5,7 | |
| | | | **RECHERCHIERTE SACHGEBIETE (Int. Cl.5)** <br><br> G 01 P <br> B 64 G |

Der vorliegende Recherchenbericht wurde für alle Patentansprüche erstellt

| Recherchenort | Abschlußdatum der Recherche | Prüfer |
|---|---|---|
| Den Haag | 24 Mai 91 | ROBINSON M.A. |